# EUROPÄISCHE PATENTSCHRIFT

(11) **EP 3 864 347 B1**
(45) Veröffentlichungstag und Bekanntmachung des Hinweises auf die Patenterteilung: **23.04.2025**
(21) Anmeldenummer: 19786744.3
(22) Anmeldetag: 08.10.2019
(51) Int. Cl.: F24C 7/08

(54) **GARGERÄT MIT KAMERA UND VERFAHREN ZUM BETREIBEN EINES GARGERÄTS**
COOKING APPLIANCE HAVING A CAMERA AND METHOD FOR OPERATING A COOKING APPLIANCE
APPAREIL DE CUISSON DOTÉ D'UNE CAMÉRA ET PROCÉDÉ POUR FAIRE FONCTIONNER L'APPAREIL DE CUISSON

(30) Priorität: 10.10.2018 DE 102018217324
(43) Veröffentlichungstag der Anmeldung: 18.08.2021
(73) Patentinhaber: BSH Hausgeräte GmbH, 81739 München (DE)
(72) Erfinder: BAUER, Hans-Jürgen, 83278 Traunstein (DE); SCHLAGBERGER, Helmut, 83329 Waging (DE)
(86) Internationale Anmeldenummer: PCT/EP2019/077160
(87) Internationale Veröffentlichungsnummer: WO 2020/074475

(56) Entgegenhaltungen:
- DE-A1- 10 236 211
- DE-A1- 102016 215 550
- US-A1- 2010 182 136
- US-A1- 2018 202 667

## Beschreibung

Die Erfindung betrifft ein Gargerät, aufweisend einen Garraum mit einer Beschickungsöffnung, eine Garraumtür zum Verschließen der Beschickungsöffnung, die ein Sichtfenster aufweist, und eine in den Garraum gerichtete Kamera. Die Erfindung betrifft auch ein Verfahren zum Betreiben eines solchen Gargeräts. Die Erfindung ist insbesondere vorteilhaft anwendbar auf Backöfen und/oder Mikrowellengeräte, die insbesondere als Haushaltsgeräte ausgebildet sein können.

EP 0 899 512 A1 offenbart ein Gargerät mit einem beheizbaren Garraum zum Garen eines Garguts und mit einer Optikeinrichtung zur Erfassung des Garguts und dessen Abbildung auf einem Bildschirm, wobei die Optikeinrichtung und insbesondere der Bildschirm integraler Bestandteil des Gargerätes sind.

WO 2012/146523 A1 offenbart eine Backofentür, die dazu bestimmt ist, an einem Haushalts- oder industriellen Backofen befestigt zu werden, und zum Verschließen einer Öffnung an einer Muffel des Backofens dient, wobei die Backofentür mit einer äußeren und einer inneren Wand und mindestens einer Bildaufnahmevorrichtung ausgerüstet ist, wobei die mindestens eine Bildaufnahmevorrichtung innerhalb der Tür zwischen den äußeren und Innenwand angeordnet und angepasst ist, um Bilder des Inneren der Muffel aufzunehmen, und wobei mindestens ein Teil der Außenseite der Außenwand eine Wärmesenke aufweist, die thermisch zu dem Bildaufzeichnungsgerät gekoppelt ist.

DE 10 2011 002 187 A1 offenbart ein Haushaltsgerät mit einem Behandlungsraum und einer den Behandlungsraum verschließenden Tür. Dem Behandlungsraum ist eine Kamera zugeordnet, die dazu geeignet und ausgebildet ist, aufgenommene Bilder aus dem Behandlungsraum an eine Anzeigeeinrichtung weiterzuleiten.

US 2017/000292 A1 offenbart einen Ofen mit einer Überwachungseinheit, die einen Garraum überwacht und Daten, die durch die Überwachung erhalten werden, über ein Netzwerk an eine externe Vorrichtung überträgt, um es einem Benutzer zu ermöglichen, einen Garprozess des Ofens durch die externe Vorrichtung zu überprüfen, ohne den Ofen direkt zu überprüfen.

WO 2016/034295 A1 betrifft ein Haushaltsgerät, insbesondere einen Garofen, mit einer Kamera. Das Haushaltsgerät umfasst eine Behandlungskammer und eine Tür zum Öffnen und Schließen der Behandlungskammer. Die Tür enthält ein Fenster oder einen transparenten Teil. Die Tür umfasst einen Türgriff, der an einer Außenseite der Tür angeordnet ist. Die Kamera ist innerhalb des Türgriffs angeordnet, wobei sich die Linsenabdeckung der Kamera von der Kamera durch das Fenster oder den transparenten Bereich der Tür in das Innere der Behandlungskammer erstreckt. Von der Kamera erzeugte Bildsignale sind durch eine Bildwiedergabeeinrichtung dargestellt oder darstellbar, wobei die Bildwiedergabeeinrichtung ein Teil der Steuereinheit des Haushaltsgeräts und/oder ein Teil einer angeschlossenen oder anschließbaren externen Einrichtung ist.

WO 2009/138359 A1 offenbart ein Haushaltsgerät mit Bilderfassungsvorrichtung, insbesondere mit interner Bilderfassungsvorrichtung, ein Verfahren zum Erfassen eines internen Zustandes oder Betriebszustandes eines solchen Haushaltsgerätes sowie ein Verfahren zur Reduzierung von thermisch bedingten Energieverlusten in einem zu öffnenden und zu schließenden Haushaltsgerät, insbesondere ein Kältegeräte oder Wärmegerät, mit einem Hohlraum, in dem ein thermodynamisches System aufnehmbar ist.

US 4,711,979 offenbart eine Betrachtungsvorrichtung, die die innere Betrachtung eines Mikrowellenofens während der Herstellung eines Nahrungsmittelprodukts oder dergleichen in einem Mikrowellenbehandlungsprozess erleichtert. Die Betrachtungsvorrichtung enthält einen rohrförmigen Träger, der durch eine Öffnung ausfahrbar ist, die in einer Seitenwand eines Mikrowellenofens ausgebildet ist, und der sich in unmittelbare Nähe zu einem Lebensmittelprodukt erstreckt, das einer Mikrowellenbehandlung in dem Ofen unterzogen wird. Die Betrachtungsvorrichtung enthält ein Element, das aus teleskopierbaren rohrförmigen Abschnitten besteht; im Wesentlichen, welches Element in Abhängigkeit von der Größe des in dem Mikrowellenofen enthaltenen Lebensmittelprodukts in der Länge durch Hinzufügen oder Entfernen von Abschnitten variiert werden kann, und welches eine Gitterstruktur zum Tragen einer optischen Betrachtungsvorrichtung in und in koaxialer Beziehung enthält das rohrförmige Element; mit der optischen Betrachtungsvorrichtung, wie einem Endoskop, Fibroskop, Boroskop oder dergleichen, von dem Mikrowellenofen nach außen in operative Verbindung mit einer geeigneten fotografischen oder Videoaufzeichnungsvorrichtung geführt wird.

Die DE 102 36 211 A1 offenbart ein Gargerät mit spiegelnden Wänden.

Die Kamera im Backofen wird in der Regel dazu verwendet, ein stehendes oder bewegtes Bild des Garguts an ein Nutzerendgerät wie ein Smartphone oder ein Tablet-PC weiterzuleiten. Bei einigen Backöfen ist es dabei nachteilig, dass die Privatsphäre von Personen verletzt könnte, die sich vor dem Backofen aufhalten, da die Kamera - je nach Positionierung - einen Blick auf die Personen gewährt.

Es ist die **Aufgabe** der vorliegenden Erfindung, die Nachteile des Standes der Technik zumindest teilweise zu überwinden und insbesondere eine Möglichkeit zur Betrachtung eines Garraums eines Gargeräts mit verbessertem Schutz einer Privatsphäre oder von Persönlichkeitsrechten bereitzustellen.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch ein Gargerät, aufweisend
- einen Garraum mit mindestens einer spiegelnden Garraumwand und mit einer Beschickungsöffnung,
- eine Garraumtür zum Verschließen der Beschickungsöffnung, die ein Sichtfenster aufweist, und
- eine in den Garraum gerichtete Kamera, die mit einer Bildverarbeitungseinrichtung gekoppelt ist und deren Blickfeld zumindest einen Bereich der spiegelnden Garraumwand liegt,
wobei
- die Bildverarbeitungseinrichtung dazu eingerichtet ist, in einem von der Kamera aufgenommenen Bild mindestens einen Bildbereich zu anonymisieren, der mindestens einen fest vorgegebenen Bildbereich umfasst, wobei der fest vorgegebene Bildbereich einem Bereich der spiegelnden Garraumwand entspricht.

Dieses Gargerät ergibt den Vorteil, dass einem Nutzer ein Bild des Garraums zur Ansicht bereitstellbar ist, in dem mögliche abgebildete Personen nicht mehr erkennbar sind. Somit wird die Privatsphäre von Personen, die sich vor dem Gargerät befinden, geschützt. Ein anonymisiertes Bild kann auch ohne Gefahr einer Nachverfolgung von Personen über das Internet oder ein anderes Datennetzwerk versandt werden, z.B. an ein mobiles Nutzerendgerät des Nutzers des Gargeräts oder auch anderer Personen. Darüber hinaus lässt sich ein solches Gargerät besonders einfach und preiswert umsetzen.

Dadurch, dass der Garraum mindestens eine spiegelnde Garraumwand aufweist und die Bildverarbeitungseinrichtung dazu eingerichtet ist, mindestens einen zu der mindestens einen spiegelnden Garraumwand zugehörigen Bildbereich zu anonymisieren, wird der Vorteil erreicht, dass nur derjenige Teil des Bilds in Bezug auf eine Anonymisierung bildverarbeitet zu werden braucht, welcher der spiegelnden Garraumwand entspricht. Dies wiederum verringert einen Datenverarbeitungsaufwand für die Anonymisierung merklich. Bei dieser Ausgestaltung wird ausgenutzt, dass nichtspiegelnde Bereiche des Garraums typischerweise keine Abbildung einer Person so bildscharf reflektieren können, dass die zugehörige Person individuell erkennbar ist. Dadurch, dass mindestens ein zu anonymisierender oder anonymisierbarer Bildbereich mindestens einen fest vorgegebenen Bildbereich umfasst, ergibt sich der Vorteil einer besonders einfachen und schnellen Umsetzung einer Anonymisierung. Dadurch, dass der fest vorgegebene Bildbereich einem in einem Blickfeld der Kamera liegenden Bereich einer spiegelnden Garraumwand entspricht, kann besonders zuverlässig sichergestellt werden, dass keine Person individuell oder als solche in dem anonymisierten Bild erkennbar ist. Es wird in anderen Worten derjenige Bildbereich anonymisiert, der einer Projektion der spiegelnden Garraumwand entspricht. Dieser Bildbereich ist durch die Eigenschaften der Kamera (z.B. deren Blickfeld) und ihrer Anordnung in Bezug auf den Garraum im Voraus bekannt, ggf. in Abhängigkeit von einer verwendeten Einschubebene.

Das Gargerät kann ein Backofen, ein Mikrowellengerät, ein Dampfbehandlungsgerät, oder eine beliebige Kombination davon sein. Das Gargerät ist insbesondere ein Haushaltsgerät.

Der Garraum dient einer Unterbringung von Gargut zu deren Behandlung durch das Gargerät, insbesondere für eine Wärme-, Mikrowellen- und/oder Dampfbehandlung. Das Gargut kann durch die Beschickungsöffnung in den Garraum eingebracht oder aus dem Garraum entnommen werden.

Durch das Sichtfenster ist in dem Garraum befindliches Gargut für sich vor dem Gargerät befindliche Personen einsichtig. Außerdem kann von vor dem Gargerät befindlichen Personen abgestrahltes Licht in den Garraum einfallen und dort abgebildet werden. Durch die in den Garraum gerichtete Kamera ist ein Bild des Garraums, einschließlich von darin untergebrachtem Gargut, aufnehmbar. Die Abbildungen der Personen in dem Garraum können folglich in (Roh-)Bildern vorhanden sein, welche durch die Kamera aufgenommen worden sind.

Die Anonymisierung kann eine Ausfüllung des Bildbereichs mit Bildpunkten einer konstanten Farbe (z.B. in Form einer "Schwärzung" o.ä.) oder mit einem Muster (z.B. in Form einer "Pixelierung") umfassen. Der anonymisierte oder zu anonymisierende Bildbereich des Bilds kann eine konkrete Person zeigen oder auch nur dazu geeignet sein, eine Person zeigen, selbst wenn keine Person vor dem Gargerät vorhanden ist.

Es ist eine Ausgestaltung, dass das Gargerät mindestens eine Datenübertragungseinrichtung zum Übertragen von mittels der Kamera aufgenommenen - anonymisierten oder nicht-anonymisierten - Bildern auf eine externe Instanz aufweist. Die Datenübertragungseinrichtung kann als Kommunikationsmodul ausgebildet sein. Die mindestens eine Datenübertragungseinrichtung kann drahtlos ausgebildet sein (z.B. in Form eines Bluetooth- und/oder eines WLAN-Moduls usw.) und/oder drahtgebunden ausgebildet sein (z.B. in Form eines Ethernet-Moduls, usw.). Die externe Instanz kann ein Nutzerendgerät, insbesondere ein mobiles Nutzerendgerät wie eine Smartphone, ein Tablet-PC usw., sein.

Die Bildverarbeitungseinrichtung ist dazu eingerichtet, die von der Kamera aufgenommenen Bilder zu verarbeiten oder zu bearbeiten. Die Kamera ist insbesondere eine Digitalkamera.

Dass die Bildverarbeitungseinrichtung dazu eingerichtet ist, in einem von der Kamera aufgenommenen Bild mindestens einen Bildbereich zu anonymisieren, umfasst insbesondere, den zu anonymisierenden Bildbereich so abzuwandeln oder zu bearbeiten, dass darin abgebildete Personen zumindest nicht mehr individuell erkennbar sind. Dies kann umfassen, dass Personen zwar noch als Personentypen bzw. als Personen als solche erkennen sind, aber nicht mehr als individuelle Personen. Auch kann dies umfassen, dass Personen dann noch nicht einmal mehr als Personen als solche erkennbar sind.

Es ist eine Weiterbildung, dass die Bildverarbeitungseinrichtung eine funktionale Komponente des Gargeräts ist. Sie kann als eine eigenständige Hardware-Komponente oder als eine Bildverarbeitungsfunktion vorliegen, die auf einer noch weitere Funktionen aufweisende Einheit ablaufen kann, z.B. auf einer Steuereinrichtung des Gargeräts. Die Steuereinrichtung dient dann z.B. auch als die Bildverarbeitungseinrichtung. Es ist eine Weiterbildung, dass die Bildverarbeitungseinrichtung eine mit dem Gargerät datentechnisch koppelbare oder gekoppelte Einrichtung oder Funktion ist und somit eine geräteexterne Einrichtung oder Funktion ist. Dadurch wird der Vorteil erreicht, dass das Gargerät besonders einfach und preiswert ausgestaltbar ist. Die Bildverarbeitungseinrichtung kann beispielsweise funktional durch einen Netzwerkserver (z.B. des Herstellers des Gargeräts) und/oder als eine cloud-basierte Funktion bereitgestellt sein.

Es ist erfindungsgemäß, dass mindestens ein anonymisierbarer Bildbereich mittels der Bildverarbeitungseinrichtung bestimmbar ist. Dadurch wird der Vorteil erreicht, dass ein besonders kleiner Teilbereich des von der Kamera aufgenommenen Bilds anonymisiert zu werden braucht.

Es ist eine Ausgestaltung, dass die Bildverarbeitungseinrichtung dazu eingerichtet ist, mehrere mittels der Kamera aufgenommene Bilder auf bewegte Bildbereiche auszuwerten und mindestens ein anonymisierbarer Bildbereich einem sich bewegt habenden Bildbereich entspricht. So wird der Vorteil erreicht, dass auf eine komplexe Objekterkennung verzichtet werden kann, um gezielt sich bewegende oder sich bewegt habende Objekte wie Personen anonymisieren zu können. Es wird hierbei ausgenutzt, dass vor einem Gargerät befindliche Personen typischerweise nicht so still stehen, dass ihre Bewegung nicht detektierbar ist. Ein sich bewegender Bildbereich deutet somit auf eine Person hin und kann anonymisiert werden. In einer Weiterbildung können zur Identifizierung eines sich (ausreichend schnell) bewegenden oder sich bewegt habenden Bereichs zwei von einer Kamera aufgenommene Bilder miteinander verglichen werden. Insbesondere können dann Bildbereiche - insbesondere in dem zuletzt aufgenommenen Bild - anonymisiert werden, welche nicht identisch oder nicht sehr ähnlich in einem der anderen Bilder vorhanden sind.

Es ist eine Ausgestaltung, dass die Bildverarbeitungseinrichtung dazu eingerichtet ist, eine Objekterkennung auf Personen auszuführen und mindestens ein anonymisierbarer Bildbereich einem zu einer erkannten Person zugehörigen Bildbereich entspricht. So kann eine besonders präzise Erkennung einer Person und/oder ein besonders kleiner zu anonymisierbarer Bildbereich erreicht werden.

Es ist eine Ausgestaltung, dass die Bildverarbeitungseinrichtung dazu eingerichtet ist, in einem von der Kamera aufgenommenen Bild nur dann mindestens einen Bildbereich zu anonymisieren, wenn vor dem Gargerät eine Anwesenheit einer Person erkannt worden ist. Dies verringert einen Datenverarbeitungsaufwand und verbessert einen Informationsgehalt des von der Kamera aufgenommenen Bilds, falls keine Anwesenheit einer Person erkannt worden ist. Das Erkennen einer Person vor dem Gargerät kann beispielsweise optisch (z.B. durch eine in einen Raum vor dem Gargerät gerichteten Kamera) oder anhand anderer physikalischer Prinzipien geschehen.

Es ist eine Ausgestaltung, dass das Gargerät mindestens eine Personenerkennungseinrichtung aufweist, die dazu eingerichtet ist, eine Anwesenheit einer Person vor dem Gargerät zu erkennen. So wird der Vorteil erreicht, dass das Gargerät die Anwesenheit einer Person eigenständig feststellen kann. Die Personenerkennungseinrichtung bzw. mindestens ein Sensor davon kann an einer Frontseite des Gargeräts angeordnet sein, z.B. integriert in eine Frontblende, die Garraumtür, einen Türgriff usw.

Es ist eine Ausgestaltung, dass die Personenerkennungseinrichtung einen Infrarot (IR)-Sensor und/oder einen Ultraschall (US)-Sensor umfasst. Diese Art on Sensoren ermöglichen eine besonders preiswerte und zuverlässige Erkennung oder Detektion einer Anwesenheit von Personen vor dem Gargerät.

Es ist eine Weiterbildung, dass die Bildverarbeitungseinrichtung dazu eingerichtet ist, in einem von der Kamera aufgenommenen Bild nur dann mindestens einen Bildbereich zu anonymisieren, wenn eine entsprechende Anonymisierungsfunktion aktiviert ist. Dies ermöglicht eine nutzergesteuerte Aktivierung und Deaktivierung der Anonymisierungsfunktion und damit eine erhöhte Nutzerzufriedenheit. So können bestimmte Nutzer auf die Anonymisierung keinen oder nur wenig Wert legen, aber dafür ein möglichst realistisches Bild des Garraums schätzen.

Die Aufgabe wird auch gelöst durch ein System, aufweisend ein Gargerät wie oben beschrieben und mindestens ein Nutzerendgerät, insbesondere mobiles Nutzerendgerät wie ein Smartphone, Tablet-PC usw., wobei das Gargerät und das Nutzerendgerät datentechnisch miteinander koppelbar oder gekoppelt sind. Das System kann analog zu dem Gargerät ausgebildet werden und weist die gleichen Vorteile auf. Insbesondere können auf dem Nutzerendgerät die bereichsweise anonymisierten Bilder dargestellt werden.

Die Aufgabe wird auch gelöst durch ein Verfahren zum Betreiben eines Gargeräts wie in Anspruch 11 beschrieben.

Das Verfahren kann analog zu dem Gargerät oder dem System ausgebildet werden und weist die gleichen Vorteile auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine Skizze eines Gargeräts in Form eines Backofens mit einer in einen Garraum des Backofens gerichteten Kamera;
- Fig.2: zeigt einen möglichen Ablauf zum Durchführen eines Verfahrens zum Betreiben des Backofens aus Fig.1;
- Fig.3: zeigt ein nicht anonymisiertes Bild, das mit der Kamera des Backofens aus Fig.1 aufgenommen worden ist; und
- Fig.4: zeigt das Bild aus Fig.3 nach einer Anonymisierung.

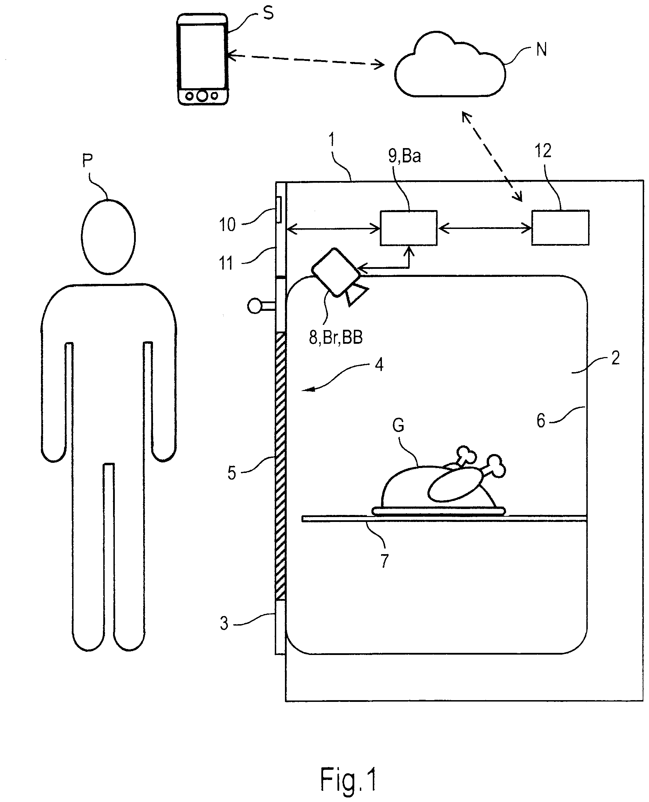

**Fig.1** zeigt als Schnittdarstellung in Seitenansicht eine Skizze eines Gargeräts in Form eines Backofens 1. Der Backofen 1 weist einen Garraum 2 auf, der frontseitig eine mittels einer Garraumtür 3 verschließbare Beschickungsöffnung 4 aufweist. Die Garraumtür 3 weist ein Sichtfenster 5 auf. Zumindest eine Rückwand 6 des Garraums 2 ist optisch spiegelnd ausgebildet. In dem Garraum 2 ist hier ein Gargutträger 7 auf einer zugehörigen Einschubebene vorhanden, auf dem Gargut G (hier in Form eines Hähnchens) aufliegt.

Der Backofen 1 weist ferner mindestens eine in den Garraum 2 gerichtete Kamera 8 auf. Mittels der Kamera 8 können (Roh-)Bilder Br des Garraums 2 aufgenommen werden. Die Kamera 8 ist so ausgestaltet und angeordnet, dass die davon aufgenommenen Bilder Br typischerweise das Gargut G und zumindest einen Teil der Rückwand 6 des Garraums 2 zeigen. Die Kamera 8 kann innerhalb des Backofens 1 (wie gezeigt) oder außerhalb des Backofens 1 angeordnet sein.

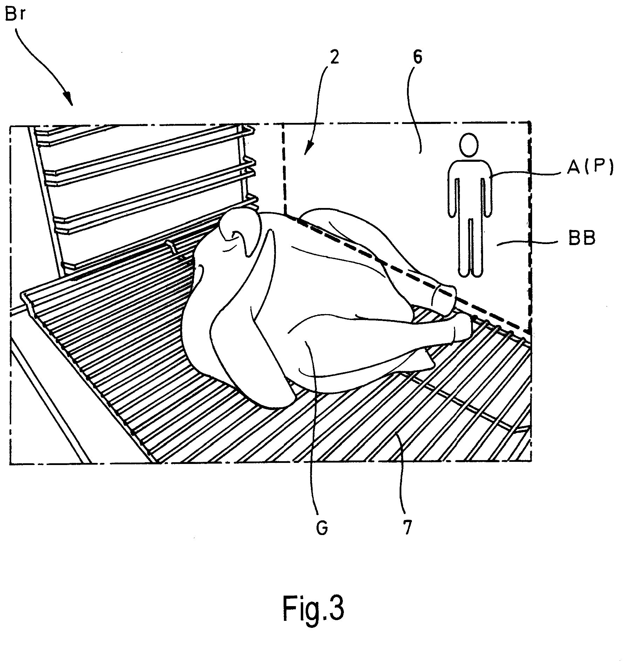

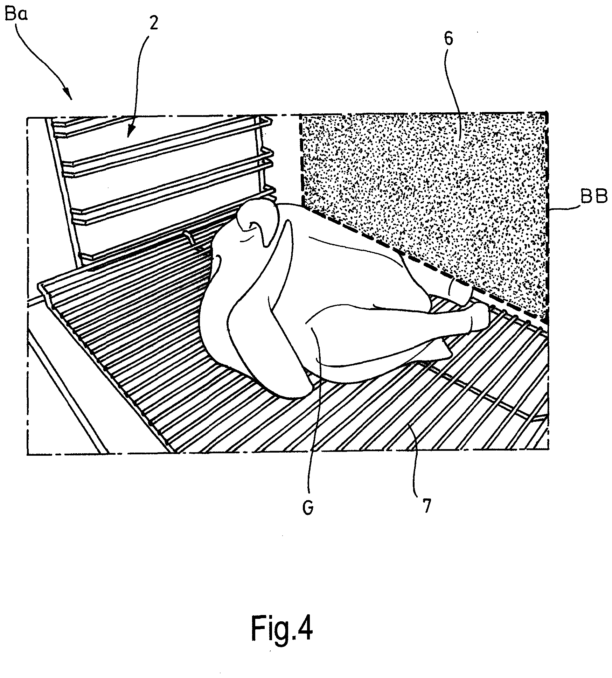

Die Kamera 8 ist mit einer Bildverarbeitungseinrichtung gekoppelt, die hier als eine Steuereinrichtung 9 des Backofens 1 mit Bildverarbeitungsfunktion ausgebildet ist. Die Steuereinrichtung 9 ist somit dazu eingerichtet, die von der Kamera 8 aufgenommenen Bilder Br (siehe Fig.3) weiterzuverarbeiten. Die Steuereinrichtung 9 ist aufgrund ihrer Bildverarbeitungsfunktion ferner dazu eingerichtet, in einem von der Kamera 8 aufgenommenen Bild Br mindestens einen Bildbereich BB (siehe Fig.3) zu anonymisieren und dadurch ein anonymisiertes Bild Ba (siehe Fig.4) bereitzustellen oder zu erzeugen.

Die Steuereinrichtung 9 ist ferner mit einer Personenerkennungseinrichtung in Form eines IR-Sensors 10 verbunden, der in einer Bedienblende 11 des Backofens 1 integriert ist. Die Steuereinrichtung 9 ist dazu eingerichtet, mittels des IR-Sensors 10 eine Anwesenheit von (wärmeabstrahlenden) Personen P von dem oder frontseitig des Backofens 1 festzustellen.

Die Steuereinrichtung 9 ist außerdem mit einem drahtlosen Kommunikationsmodul 12 wie einem WLAN-Modul oder einem Bluetooth-Modul des Backofens 1 verbunden. Die Steuereinrichtung 9 ist dazu eingerichtet, von der Kamera 8 aufgenommene und ggf. anonymisierte Bilder Br, Ba über das Kommunikationsmodul 12 und ggf. ein Datennetzwerk N an ein Nutzerendgerät, hier: in Form eines Smartphones S, zu übertragen.

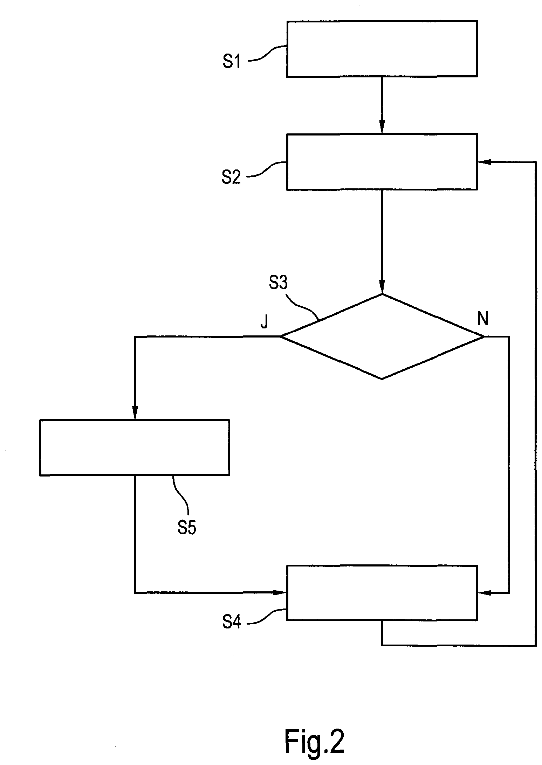

**Fig.2** zeigt einen möglichen Ablauf zum Durchführen eines Verfahrens zum Betreiben des Backofens 1.

In einem Schritt S1 wird von einem Nutzer ein Garablauf aktiviert, der eine Aufnahme von Bildern Br aus dem Garraum 2 mittels der Kamera 8 umfasst.

In einem Schritt S2 wird mittels der Kamera 8 mindestens ein Bild Br aufgenommen.

In einem Schritt S3 wird abgefragt, ob mittels des IR-Sensors 10 eine Anwesenheit oder Abwesenheit mindestens einer Person P vor dem Backofen 1 festgestellt worden ist.

Falls nicht ("N"), wird das von der der Kamera 8 aufgenommene Bild nicht anonymisiert und in einem Schritt S4 als solches auf das Nutzerendgerät S übertragen.

Falls doch ("J"), wird in einem Schritt S5 mittels der Steuereinrichtung 9 ein fest vorgegebener Bildbereich BB des Bild Br z.B. durch Schwärzen gefüllt und damit anonymisiert, wobei der Bildbereich BB dem in dem Bild Br abgebildeten Bereich der Rückwand 6 des Garraums 2 entspricht.

Folgend wird das in Schritt S5 anonymisierte Bild Ba auf das Nutzerendgerät S übertragen, wo es auf einer Bildanzeigeeinrichtung in Form eines Displays anzeigbar ist.

Die obigen Schritte S2 bis S5 können im Rahmen eines Garablaufs auch mehrfach durchlaufen werden, z.B. in regelmäßigen Zeitabständen.

In einer Weiterbildung wird die Anonymisierung nur durchgeführt, wenn ein Nutzer eine entsprechende Einstellung des Backofens 1 vorgenommen oder bestätigt hat.

**Fig.3** zeigt ein nicht anonymisiertes Bild Br, das mit der Kamera 8 des Backofens 1 aufgenommen worden ist. Die Kamera 8 befindet sich im Bereich einer Decke des Garraums 2 oder in einer Seitenwand des Garraums 2 in der Nähe der Decke. Durch die fixe Anordnung der Kamera 8 in Bezug auf den Garraum 2 ist der Bildbereich BB, der die spiegelnde Rückwand 6 des Garraums 2 in dem Bild Br abbildet, fest vorgegeben (wie durch die gestrichelte Kontur angedeutet). Befindet sich eine Person P vor dem Backofen 1, kann sie auf der Rückwand 6 des Garraums 2 abbildet werden, wie symbolhaft durch die Abbildung A(P) der Person P angedeutet.

**Fig.4** zeigt ein anonymisiertes Bild Ba, das durch Anonymisierung (hier: Schwärzung) des Bildbereichs BB des Bilds Br aus Fig.3 erzeugt worden ist. Dabei ist auch die Abbildung des Garguts G in einem Teil mitgeschwärzt worden, die innerhalb des Bildbereichs BB liegt.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

### Bezugszeichenliste

- 1: Backofen
- 2: Garraum
- 3: Garraumtür
- 4: Beschickungsöffnung
- 5: Sichtfenster
- 6: Rückwand des Garraums
- 7: Gargutträger
- 8: Kamera
- 9: Steuereinrichtung mit Bildverarbeitungsfunktion
- 10: IR-Sensor
- 11: Bedienblende
- 12: Kommunikationsmodul
- A: Abbildung einer Person
- Ba: Anonymisiertes Bild
- BB: Bildbereich
- Br: Nicht anonymisiertes Bild
- N: Datennetzwerk
- G: Gargut
- P: Person
- S: Smartphone
- S1-S5: Verfahrensschritte

## Patentansprüche

1. Gargerät (1), aufweisend
- einen Garraum (2) mit einer Beschickungsöffnung (4) und mindestens einer spiegelnden Garraumwand (6),
- eine Garraumtür (3) zum Verschließen der Beschickungsöffnung (4), die ein Sichtfenster (5) aufweist, **gekennzeichnet durch**
- eine in den Garraum (2) gerichtete Kamera (8), die mit einer Bildverarbeitungseinrichtung (9) gekoppelt ist und in deren Blickfeld zumindest ein Bereich der spiegelnden Garraumwand (6) liegt,
wobei
- die Bildverarbeitungseinrichtung (9) dazu eingerichtet ist, in einem von der Kamera (8) aufgenommenen Bild (Br) mindestens einen Bildbereich (BB) zu anonymisieren, der mindestens einen fest vorgegebenen Bildbereich umfasst, wobei der fest vorgegebene Bildbereich einem Bereich der mindestens einen spiegelnden Garraumwand (6) entspricht.

2. Gargerät (1) nach einem der vorhergehenden Ansprüche, wobei mindestens ein anonymisierbarer Bildbereich (BB) mittels einer Bildauswertung bestimmbar ist.

3. Gargerät (1) nach Anspruch 2, wobei die Bildverarbeitungseinrichtung (9) dazu eingerichtet ist, mehrere mittels der Kamera (8) aufgenommene Bilder (Br) auf bewegte Bildbereiche auszuwerten und mindestens ein anonymisierbarer Bildbereich einem sich bewegt habenden Bildbereich entspricht.

4. Gargerät (1) nach Anspruch 2, wobei die Bildverarbeitungseinrichtung (9) dazu eingerichtet ist, eine Objekterkennung auf Personen (P) auszuführen und mindestens ein anonymisierbarer Bildbereich einem zu einer mittels der Objekterkennung erkannten Person (P) zugehörigen Bildbereich entspricht.

5. Gargerät (1) nach einem der vorhergehenden Ansprüche, wobei die Bildverarbeitungseinrichtung (9) dazu eingerichtet ist, in einem von der Kamera (8) aufgenommenen Bild (Br) nur dann mindestens einen Bildbereich (BB) zu anonymisieren, wenn vor dem Gargerät (1) eine Anwesenheit einer Person (P) erkannt worden ist.

6. Gargerät (1) nach Anspruch 5, wobei das Gargerät (1) mindestens eine Personenerkennungseinrichtung (10) aufweist, die dazu eingerichtet ist, eine Anwesenheit einer Person (P) vor dem Gargerät (1) zu erkennen.

7. Gargerät (1) nach Anspruch 6, wobei die Personenerkennungseinrichtung (10) einen IR-Sensor und/oder einen US-Sensor umfasst.

8. Gargerät (1) nach einem der vorhergehenden Ansprüche, wobei das Gargerät (1) eine Datenübertragungseinrichtung (12) zum Übertragen von mittels der Kamera (8) aufgenommenen Bildern (Br, Ba) auf eine externe Instanz (S) aufweist.

9. Gargerät (1) nach einem der vorhergehenden Ansprüche, wobei die Bildverarbeitungseinrichtung (9) eine Komponente des Gargeräts (1) ist.

10. System, aufweisend ein Gargerät (1) nach einem der vorhergehenden Ansprüche einschließlich Anspruch 8 und mindestens eine externe Instanz in Form eines Nutzerendgeräts (S), wobei das Gargerät (1) und das Nutzerendgerät (S) datentechnisch miteinander koppelbar sind.

11. Verfahren (S1-S5) zum Betreiben eines Gargeräts (1) nach einem der Ansprüche 1 bis 8, bei dem
- die Kamera (8) mindestens ein Bild (Br) des Garraums (2) aufnimmt (S2),
- in mindestens einem Bild (Br) mindestens ein zu dem mindestens einen fest vorgegeben Bereich der spiegelnden Garraumwand (6) zugehöriger Bildbereich (BB) anonymisiert wird (S5) und
- das anonymisierte Bild (Ba) mindestens einer Bildanzeigeeinrichtung (S), insbesondere eines Nutzerendgeräts (S), bereitgestellt wird (S4).

## Claims

1. Cooking appliance (1), having
- a cooking compartment (2) with a loading opening (4) and at least one reflecting cooking compartment wall (6),
- a cooking compartment door (3) for closing off the loading opening (4), which has a viewing window (5), **characterised by**
- a camera (8), which is directed into the cooking compartment (2) and is coupled to an image processing facility (9), and in the field of view of which at least one region of the reflective cooking compartment wall (6) lies,
wherein
- the image processing facility (9) is configured to anonymise at least one image region (BB) in an image (Br) recorded by the camera (8), which image region comprises at least one permanently predefined image region, wherein the permanently predefined image region corresponds to a region of the at least one reflective cooking compartment wall (6).

2. Cooking appliance (1) according to one of the preceding claims, wherein at least one image region (BB) that can be anonymised can be determined by means of an image evaluation.

3. Cooking appliance (1) according to claim 2, wherein the image processing facility (9) is configured to evaluate a plurality of images (Br) recorded by means of the camera (8) for image regions that have moved and at least one image region that can be anonymised corresponds to an image region that has moved.

4. Cooking appliance (1) according to claim 2, wherein the image processing facility (9) is configured to carry out an object recognition with regard to persons (P) and at least one image region that can be anonymised corresponds to an image region associated with a person (P) recognised by means of the object recognition.

5. Cooking appliance (1) according to one of the preceding claims, wherein the image processing facility (9) is configured to only anonymise at least one image region (BB) in an image (Br) recorded by the camera (8) if a presence of a person (P) has been recognised in front of the cooking appliance (1).

6. Cooking appliance (1) according to claim 5, wherein the cooking appliance (1) has at least one person recognition facility (10) that is configured to identify a presence of a person (P) in front of the cooking appliance (1).

7. Cooking appliance (1) according to claim 6, wherein the person recognition facility (10) comprises an IR sensor and/or an ultrasound sensor.

8. Cooking appliance (1) according to one of the preceding claims, wherein the cooking appliance (1) has a data transfer facility (12) for transferring images (Br, Ba) recorded by means of the camera (8) to an external instance (S).

9. Cooking appliance (1) according to one of the preceding claims, wherein the image processing facility (9) is a component of the cooking appliance (1).

10. System, having a cooking appliance (1) according to one of the preceding claims including claim 8 and at least one external instance in the form of a user terminal (S), wherein the cooking appliance (1) and the user terminal (S) can be coupled to one another from a data perspective.

11. Method (S1-S5) for operating a cooking appliance (1) according to one of claims 1 to 8, in which
- a camera (8) records (S2) at least one image (Br) of the cooking compartment (2),
- at least one image region (BB) associated with the at least one permanently predefined region of the reflective cooking compartment wall (6) is anonymised (S5) in at least one image (Br) and
- the anonymised image (Ba) is provided (S4) to at least one image display facility (S), in particular a user terminal (S).

## Revendications

1. Appareil de cuisson (1), présentant
- un espace de cuisson (2) avec une ouverture de chargement (4) et au moins une paroi d'espace de cuisson réfléchissante (6),
- une porte d'espace de cuisson (3) pour la fermeture de l'ouverture de chargement (4), qui présente une fenêtre (5), **caractérisé par**
- une caméra (8) orientée dans l'espace de cuisson (2), qui est couplée à un dispositif de traitement d'images (9) et dans le champ de vision de laquelle se trouve au moins une zone de la paroi d'espace de cuisson réfléchissante (6),
dans lequel
- le dispositif de traitement d'images (9) est aménagé pour anonymiser, dans une image (Br) prise par la caméra (8), au moins une zone d'image (BB) qui comprend au moins une zone d'image prédéfinie de manière fixe, dans lequel la zone d'image prédéfinie de manière fixe correspond à une zone de l'au moins une paroi d'espace de cuisson réfléchissante (6).

2. Appareil de cuisson (1) selon l'une des revendications précédentes, dans lequel au moins une zone d'image (BB) pouvant être anonymisée peut être déterminée au moyen d'une évaluation d'image.

3. Appareil de cuisson (1) selon la revendication 2, dans lequel le dispositif de traitement d'images (9) est aménagé pour évaluer plusieurs images (Br) prises au moyen de la caméra (8) en ce qui concerne des zones d'image en mouvement et au moins une zone d'image pouvant être anonymisée correspond à une zone d'image qui s'est déplacée.

4. Appareil de cuisson (1) selon la revendication 2, dans lequel le dispositif de traitement d'images (9) est aménagé pour effectuer une reconnaissance d'objets sur personnes (P) et au moins une zone d'image pouvant être anonymisée correspond à une zone d'image associée à une personne (P) reconnue au moyen de la reconnaissance d'objets.

5. Appareil de cuisson (1) selon l'une des revendications précédentes, dans lequel le dispositif de traitement d'images (9) est aménagé pour anonymiser au moins une zone d'image (BB) dans une image (Br) prise par la caméra (8) uniquement lorsqu'une présence d'une personne (P) a été détectée devant l'appareil de cuisson (1).

6. Appareil de cuisson (1) selon la revendication 5, dans lequel l'appareil de cuisson (1) présente au moins un dispositif de détection de personnes (10) qui est aménagé pour détecter une présence d'une personne (P) devant l'appareil de cuisson (1).

7. Appareil de cuisson (1) selon la revendication 6, dans lequel le dispositif de détection de personnes (10) comprend un capteur IR et/ou un capteur US.

8. Appareil de cuisson (1) selon l'une des revendications précédentes, dans lequel l'appareil de cuisson (1) présente un dispositif de transmission de données (12) pour la transmission à une instance externe (S) d'images (Br, Ba) prises au moyen de la caméra (8).

9. Appareil de cuisson (1) selon l'une des revendications précédentes, dans lequel le dispositif de traitement d'images (9) est un composant de l'appareil de cuisson (1).

10. Système présentant un appareil de cuisson (1) selon l'une des revendications précédentes, y compris la revendication 8, et au moins une instance externe sous la forme d'un terminal d'utilisateur (5), dans lequel l'appareil de cuisson (1) et le terminal d'utilisateur (S) peuvent être couplés l'un à l'autre sur le plan de la technique de données.

11. Procédé (S1-S5) d'exploitation d'un appareil de cuisson (1) selon l'une des revendications 1 à 8, dans lequel
- la caméra (8) prend (S2) au moins une image (Br) de l'espace de cuisson (2),
- dans au moins une image (Br), au moins une zone d'image (BB) associée à l'au moins une zone prédéfinie de manière fixe de la paroi d'espace de cuisson réfléchissante (6) est anonymisée (S5) et
- l'image anonymisée (Ba) est mise à disposition (S4) d'au moins un dispositif d'affichage d'images (S), en particulier d'un terminal d'utilisateur (S).
